# FASCICULE DE BREVET EUROPEEN

(11) **EP 2 114 220 B1**
(45) Date de publication et mention de la délivrance du brevet: **15.06.2011**
(21) Numéro de dépôt: 08761790.8
(22) Date de dépôt: 21.01.2008
(51) Int. Cl.: A47J 37/06, A47J 37/07

(54) **APPAREIL DE CUISSON DU TYPE GRIL A GAZ**
KOCHVORRICHTUNG NACH ART EINES GASGRILLS
COOKING APPLIANCE OF THE GAS GRILL TYPE

(30) Priorité: 07.02.2007 FR 0700865
(43) Date de publication de la demande: 11.11.2009
(73) Titulaire: Application des Gaz, 69230 Saint-Genis-Laval (FR)
(72) Inventeur: PAYSANT, Christophe, 42580 La Tour-en-Jarez (FR)
(74) Mandataire: Maureau, Philippe
(86) Numéro de dépôt international: PCT/FR2008/000073
(87) Numéro de publication internationale: WO 2008/107556

(56) Documents cités:
- EP-A1- 0 713 668
- WO-A-96/14786
- US-A- 4 089 258
- US-A- 5 542 345
- US-A- 5 676 048
- US-A1- 2003 140 798

## Description

La présente invention concerne un appareil de cuisson du type gril à gaz.

Le document EP 0 713 668 décrit un gril à gaz comprenant :
- un châssis délimitant un puit de cuisson présentant une ouverture supérieure,
- une grille de cuisson recouvrant au moins en partie l'ouverture supérieure du puits de cuisson, et
- au moins un brûleur à gaz radiant supporté par le châssis et présentant une surface rayonnante émettant des infra-rouges en direction de la grille de cuisson, cette surface étant adjacente au puits de cuisson et située en dessous de la grille de cuisson.

Ce type de gril à gaz permet un bon rendement de cuisson et une homogénéité correcte de cette dernière dans un plan horizontal de cuisson, ceci en préservant une cuisson saine, c'est-à-dire sans flammes ou fumées cancérigènes, et savoureuse, c'est-à-dire utilisant principalement un rayonnement thermique à relativement haute température comme mode de cuisson.

Toutefois, lorsque l'on souhaite augmenter la taille de la grille de cuisson de ce type de gril à gaz, il n'est plus possible de maintenir cette homogénéité de la cuisson.

En effet, il a été constaté qu'en utilisant une grille de cuisson et des puits de cuisson de plus grandes dimensions il existe des zones froides au niveau du centre de la grille de cuisson.

La présente invention vise à remédier à ces inconvénients.

La présente invention consiste donc à fournir un appareil de cuisson du type gril à gaz permettant d'utiliser une grille de cuisson de plus grandes dimensions, de conserver une homogénéité de la température de cuisson sur la grille de cuisson, tout en préservant une cuisson saine et savoureuse.

A cet effet, la présente invention concerne un appareil de cuisson, notamment du type précité, caractérisé en ce qu'il comporte au moins un brûleur à gaz par convection supporté par le châssis et disposé en dessous de la grille de cuisson, et des moyens de protection destinés à empêcher un écoulement des graisses de cuisson sur le brûleur à gaz par convection.

Cette disposition du brûleur à gaz par convection permet de chauffer par convection le centre de la grille de cuisson, ce qui permet d'éviter l'apparition de zones « froides » au niveau du centre de la grille de cuisson, et donc de conserver une température homogène de cette dernière.

La présence des moyens de protection du brûleur à gaz par convection empêche un écoulement des graisses de cuisson sur celui-ci, et donc évite la combustion de ces dernières. Il en résulte la préservation d'une cuisson saine et savoureuse.

Par "brûleur à gaz radiant", on entend tout brûleur émettant un rayonnement infra-rouge, qu'il s'agisse d'un brûleur constitué par une structure réfractaire (grille métallique ou céramique en plaque), portée à l'incandescence par des flammes de combustion, ou qu'il s'agisse d'un brûleur catalytique à air induit, c'est-à-dire brûlant directement un mélange gaz combustible/air comburant.

Avantageusement, un brûleur à gaz par convection est disposé sensiblement en dessous du centre de la grille de cuisson.

Selon une autre caractéristique de l'invention, les moyens de protection comportent des premiers moyens de déflection des graisses de cuisson supportés par le châssis et disposés au dessus du brûleur à gaz par convection, et en dessous de la grille de cuisson.

De préférence, les premiers moyens de déflection comportent une plaque métallique présentant une section en V dont la pointe est dirigée en direction de la grille de cuisson. Cette disposition permet également d'éviter la combustion des graisses de cuisson, ce qui préserve encore une cuisson saine et savoureuse.

Selon une autre caractéristique de l'invention, les moyens de protection sont destinés à empêcher un écoulement des graisses de cuisson sur au moins un brûleur à gaz radiant.

De préférence, les moyens de protection comportent des seconds moyens de déflection des graisses de cuisson ménagés sur la grille de cuisson.

Avantageusement, les seconds moyens de déflection comportent un ensemble de plaques inclinées disposées entre les barreaux de la grille de cuisson et au dessus d'un brûleur à gaz à protéger.

Selon une autre caractéristique de l'invention, la surface rayonnante d'au moins un brûleur à gaz radiant est inclinée de haut en bas et de l'extérieur vers l'intérieur. Cette orientation de la surface rayonnante du brûleur à gaz radiant permet d'assurer un chauffage par rayonnement de la partie centrale de la grille de cuisson.

Avantageusement, l'appareil de cuisson comporte un brûleur à gaz intermédiaire reliant les différents brûleurs à gaz entre eux et communiquant la combustion entre les différents brûleurs à gaz. Le brûleur à gaz intermédiaire permet d'assurer un allumage d'un brûleur à gaz dont les moyens d'allumage n'ont pas permis son allumage en communiquant à ce dernier la combustion d'un autre brûleur à gaz.

De préférence, le brûleur à gaz par convection est un brûleur tubulaire à flamme.

Selon encore une autre caractéristique de l'invention, l'appareil de cuisson comprend un tiroir de cuisson monté dans le châssis en dessous des brûleurs à gaz radiant et par convection.

De toute façon l'invention sera bien comprise à l'aide de la description qui suit, en référence au dessin schématique indexé représentant, à titre d'exemple non limitatif, une forme d'exécution de cet appareil de cuisson.
Figure 1 en est une vue en perspective.
Figure 2 en est une vue partielle en perspective du dessus, à l'échelle agrandie.
Figure 3 en est une vue en coupe.

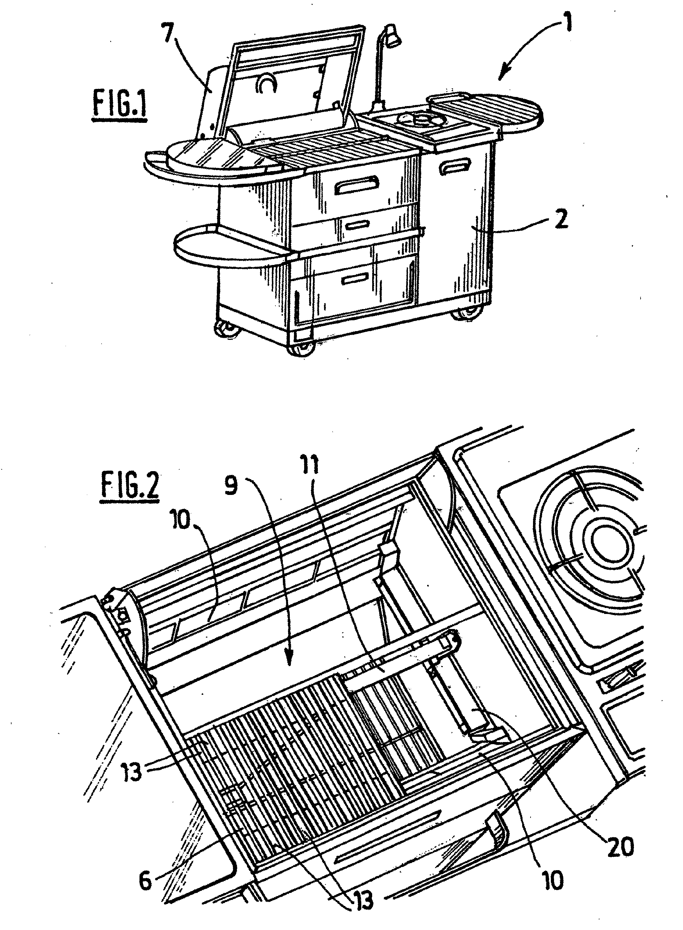

Les figures 1 à 3 représentent un appareil de cuisson 1 du type gril à gaz comprenant :
- un châssis 2 délimitant un puit de cuisson 3 présentant une section transversale rectangulaire et comportant des ouvertures supérieure 3a et inférieure 3b, le puits de cuisson 3 étant délimité pour l'essentiel par deux parois transversales verticales et deux parois longitudinales 4, 5 inclinées de haut en bas et de l'extérieur vers l'intérieur, l'angle d'inclinaison des parois longitudinales étant de l'ordre de 20° par rapport à la verticale,
- une grille de cuisson 6 recouvrant l'ouverture supérieure 3a du puits de cuisson 3,
- un couvercle 7 monté déplaçable sur le châssis 2 entre des positions d'ouverture et de fermeture de l'ouverture supérieure 3a du puits de cuisson 3,
- deux brûleurs à gaz radiant 8, 9 identiques supportés par le châssis et disposés sur chacune des deux parois longitudinales du puits de cuisson en dessous de la grille de cuisson 6, les deux brûleurs à gaz radiant présentant une surface rayonnante 10 coplanaire avec la paroi longitudinale respective du puits de cuisson et émettant des infra-rouges en direction de la grille de cuisson,
- un brûleur à gaz par convection 11 supporté par le châssis 2 et disposé en dessous du centre de la grille de cuisson 6, le brûleur à gaz par convection étant un brûleur tubulaire à flamme,
- des moyens de protection 12, 13 du brûleur à gaz par convection destinés à empêcher un écoulement des graisses de cuisson sur celui-ci,
- un tiroir de cuisson 14 monté dans le châssis en dessous des brûleurs à gaz radiant et par convection,
- un fond 15 fermant le puits de cuisson à sa partie inférieure dans lequel est ménagée l'ouverture inférieure 3b du puits de cuisson,
- un récipient de recueil 16 monté amovible sur le châssis transversalement en dessous de l'ouverture inférieure du puits de cuisson.

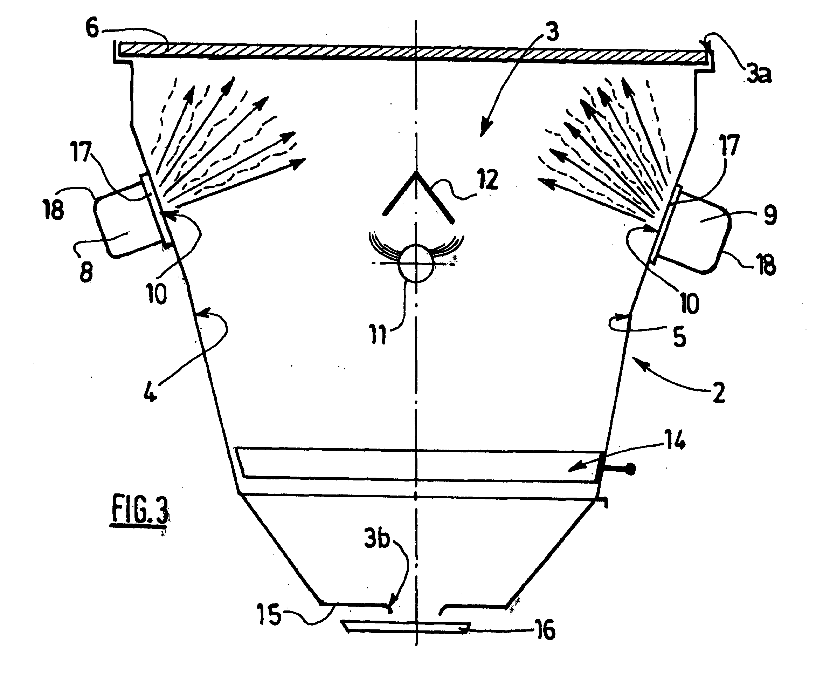

Comme le montre la figure 3, chaque brûleur à gaz radiant 8, 9 comprend une pièce rectangulaire 17, dont l'épaisseur est beaucoup plus faible que ses autres dimensions, en céramique réfractaire, traversée par une multiplicité de trous de passage du mélange gaz combustible/air comburant à brûler, et dont la face aval constitue la surface rayonnante 10 décrite précédemment. Chacune des pièces 17 est fixée de manière étanche dans une ouverture adaptée ménagée dans une paroi longitudinale du puits de cuisson. En correspondance avec la face amont de chaque pièce est rapportée une enveloppe 18 permettant de former une chambre de distribution du mélange air comburant/gaz combustible à brûler, arrivant par un conduit non représenté, et ceci à partir d'une source de gaz combustible également non représentée.

Conformément à la figure 3, chaque surface rayonnante 10 est disposée dans le puits de cuisson entre la grille de cuisson 6 et le fond 15.

Comme montré plus particulièrement sur la figure 3, les moyens de protection du brûleur à gaz par convection comportent des premiers moyens de déflection des graisses de cuisson supportés par le châssis et disposés au dessus du brûleur à gaz par convection 11. Ces premiers moyens de déflection comportent une plaque métallique 12 présentant une section en V dont la pointe est dirigée en direction de la grille de cuisson.

Les moyens de protection comportent également des seconds moyens de déflection des graisses de cuisson ménagés sur la grille de cuisson. Ces seconds moyens de déflection comportent un ensemble de plaques inclinées 13 disposées entre les barreaux de la grille de cuisson 6 et au dessus du brûleur à gaz par convection.

En outre, l'appareil de cuisson 1 comprend des moyens de protection de chaque brûleur à gaz radiant destinés à empêcher un écoulement des graisses de cuisson sur ceux-ci, ces moyens de protection comportant un ensemble de plaques inclinées 19 disposées entre les barreaux de la grille de cuisson et au niveau des bords de la grille situés au dessus des brûleurs à gaz radiant.

De plus, comme montré sur la figure 2, l'appareil de cuisson 1 comprend un brûleur à gaz intermédiaire 20 reliant les différents brûleurs à gaz entre eux et communiquant la combustion entre les différents brûleurs à gaz.

En fonctionnement, comme représenté à la figure 3, la grille de cuisson 6 reçoit un rayonnement infra-rouge des deux surfaces rayonnantes 10, représenté par des flèches avec traits droits. Et les fumées de combustion, dont la trajectoire est représentée par un trait irrégulier, après avoir été éjectées des brûleurs à gaz radiant avec une vitesse résiduelle, montent lentement vers la grille de cuisson. De la chaleur par convection est également transmise par le brûleur tubulaire à flamme 11 en direction de la grille de cuisson. La conjonction de ces fumées de combustion, de la convection, et du rayonnement infra-rouge permet d'obtenir sur la grille de cuisson 6 une température modérée de l'ordre de 250 à 300°C, avec une bonne répartition surfacique de la chaleur, ce qui contribue à une cuisson saine et savoureuse d'une pièce alimentaire, par exemple un morceau de viande à griller, déposée sur la grille de cuisson.

Il doit être noté que les graisses de cuisson ne peuvent pas entrer en contact avec les différents brûleurs à gaz compte tenu de la présence des différents moyens de protection 12, 13 et 19, ce qui évite l'apparition de flammes ou fumées cancérigènes.

Comme il va de soi, l'invention ne se limite pas à la seule forme d'exécution de cet appareil de cuisson, décrite ci-dessus à titre d'exemple, elle en embrasse au contraire toutes les variantes de réalisation.

## Revendications

1. Appareil de cuisson (1), notamment du type gril à gaz, comprenant :
- un châssis (2) délimitant un puit de cuisson (3) présentant une ouverture supérieure (3a),
- une grille de cuisson (6) recouvrant au moins en partie l'ouverture supérieure du puits de cuisson,
- au moins un brûleur à gaz radiant (8, 9) supporté par le châssis et présentant une surface rayonnante (10) émettant des infra-rouges en direction de la grille de cuisson, cette surface étant adjacente au puits de cuisson et située en dessous de la grille de cuisson (6);
**caractérisé en ce qu'**il comporte au moins un brûleur à gaz par convection (11) supporté par le châssis et disposé en dessous de la grille de cuisson, et des moyens de protection (12, 13) destinés à empêcher un écoulement des graisses de cuisson sur le brûleur à gaz par convection.

2. Appareil de cuisson selon la revendication 1, **caractérisé en ce qu'**un brûleur à gaz par convection (11) est disposé sensiblement en dessous du centre de la grille de cuisson.

3. Appareil de cuisson selon l'une des revendications 1 et 2, **caractérisé en ce que** les moyens de protection comportent des premiers moyens de déflection des graisses de cuisson supportés par le châssis et disposés au dessus du brûleur à gaz par convection, et en dessous de la grille de cuisson.

4. Appareil de cuisson selon la revendication 3, **caractérisé en ce que** les premiers moyens de déflection comportent une plaque métallique (12) présentant une section en V dont la pointe est dirigée en direction de la grille de cuisson.

5. Appareil de cuisson selon l'une des revendications 1 à 4, **caractérisé en ce que** les moyens de protection sont destinés à empêcher un écoulement des graisses de cuisson sur au moins un brûleur à gaz radiant.

6. Appareil de cuisson selon l'une des revendications 1 à 5, **caractérisé en ce que** les moyens de protection comportent des seconds moyens de déflection des graisses de cuisson ménagés sur la grille de cuisson.

7. Appareil de cuisson selon la revendication 6, **caractérisé en ce que** les seconds moyens de déflection comportent un ensemble de plaques inclinées (13) disposées entre les barreaux de la grille de cuisson et au dessus d'un brûleur à gaz à protéger.

8. Appareil de cuisson selon l'une des revendications 1 à 7, **caractérisé en ce que** la surface rayonnante (10) d'au moins un brûleur à gaz radiant est inclinée de haut en bas et de l'extérieur vers l'intérieur.

9. Appareil de cuisson selon l'une des revendications 1 à 8, **caractérisé en ce qu'**il comporte un brûleur à gaz intermédiaire (20) reliant les différents brûleurs à gaz entre eux et communiquant la combustion entre les différents brûleurs à gaz.

10. Appareil de cuisson selon l'une des revendications 1 à 9, **caractérisé en ce que** le brûleur à gaz par convection est un brûleur tubulaire à flamme (11).

11. Appareil de cuisson selon l'une des revendications 1 à 10, **caractérisé en ce qu'**il comprend un tiroir de cuisson (14) monté dans le châssis en dessous des brûleurs à gaz radiant et par convection.

## Claims

1. A cooking appliance (1), in particular of the type of a gas grill, comprising:
- a frame (2) defining a cooking shaft (3) having an upper opening (3a),
- a cooking grid (6) at least partially covering the upper opening of the cooking shaft,
- at least one radiant gas burner (8, 9) supported by the frame and having a radiating surface (10) emitting infrared radiation in the direction of the cooking grid, this surface being adjacent to the cooking shaft and located under the cooking grid (6),
**characterized in that** it comprises at least one convection gas burner (11) supported by the frame and arranged under the cooking grid, and protection means (12, 13) for preventing spillage of cooking fats onto the convection gas burner.

2. The cooking appliance according to claim 1, **characterized in that** a convection gas burner (11) is arranged substantially under the middle of the cooking grid.

3. The cooking appliance according to any of claims 1 and 2, **characterized in that** the protection means include first means for deflecting cooking fats, supported by the frame and arranged above the convection gas burner, and under the cooking grid.

4. The cooking appliance according to claim 3, **characterized in that** the first deflecting means include a metal plate (12) having a V-shaped section, the tip of which is directed in the direction of the cooking grid.

5. The cooking appliance according to any of claims 1 to 4, **characterized in that** the protection means are to prevent spillage of cooking fats onto at least one radiant gas burner.

6. The cooking appliance according to any of claims 1 to 5, **characterized in that** the protection means include second means for deflecting cooking fats, made on the cooking grid.

7. The cooking appliance according to claim 6, **characterized in that** the second deflecting means include a set of inclined plates (13) arranged between the bars of the cooking grid and above a gas burner to be protected.

8. The cooking appliance according to any of claims 1 to 7, **characterized in that** the radiating surface (10) of at least one radiant gas burner is inclined from top to bottom and from the outside to the inside.

9. The cooking appliance according to any of claims 1 to 8, **characterized in that** comprises an intermediate gas burner (20) connecting the various gas burners together and communicating combustion between the various gas burners.

10. The cooking appliance according to any of claims 1 to 9, **characterized in that** the convection gas burner is a tubular flame burner (11).

11. The cooking appliance according to any of claims 1 to 10, **characterized in that** it comprises a cooking slide (14) mounted inside the frame under the radiant and convection gas burners.

## Patentansprüche

1. Kochgerät (1), insbesondere nach Art eines Gasgrills, umfassend:
- einen Unterbau (2), der einen Kochbereich (3) mit einer oberen Öffnung (3a) begrenzt,
- ein Bratrost (6), das die obere Öffnung des Kochbereichs mindestens teilweise abdeckt,
- mindestens einen Strahlungsgasbrenner (8, 9), der von dem Unterbau getragen wird und eine strahlende Oberfläche (10) aufweist, die Infrarotstrahlen in Richtung auf das Bratrost emittiert, wobei diese Oberfläche neben dem Kochbereich und unter dem Bratrost (6) liegt,
**dadurch gekennzeichnet, dass** es mindestens einen Konvektionsgasbrenner (11), der von dem Unterbau getragen wird und unter dem Bratrost angeordnet ist, und Schutzmittel (12, 13), die dazu gedacht sind, um ein Abfließen von Kochfetten auf den Konvektionsgasbrenner zu verhindern, umfasst.

2. Kochgerät nach Anspruch 1, **dadurch gekennzeichnet, dass** ein Konvektionsgasbrenner (11) im Wesentlichen unter der Mitte des Bratrostes angeordnet ist.

3. Kochgerät nach einem der Ansprüche 1 und 2, **dadurch gekennzeichnet, dass** die Schutzmittel erste Mittel zum Ablenken von Kochfetten umfassen, die von dem Unterbau getragen werden und über dem Konvektionsgasbrenner und unter dem Bratrost angeordnet sind.

4. Kochgerät nach Anspruch 3, **dadurch gekennzeichnet, dass** die ersten Ablenkmittel eine Metallplatte (12) umfassen, die im Schnitt die Form eines V aufweist, dessen Spitze in Richtung auf das Bratrost gerichtet ist.

5. Kochgerät nach einem der Ansprüche 1 bis 4, **dadurch gekennzeichnet, dass** die Schutzmittel dazu gedacht sind, um ein Abfließen von Kochfetten auf mindestens einen Strahlungsgasbrenner zu verhindern.

6. Kochgerät nach einem der Ansprüche 1 bis 5, **dadurch gekennzeichnet, dass** die Schutzmittel zweite Mittel zum Ablenken von Kochfetten umfassen, die auf dem Bratrost eingerichtet sind.

7. Kochgerät nach Anspruch 6, **dadurch gekennzeichnet, dass** die zweiten Ablenkmittel eine Anordnung von geneigten Platten (13) umfassen, die zwischen den Stangen des Bratrostes und über einem zu schützenden Gasbrenner angeordnet sind.

8. Kochgerät nach einem der Ansprüche 1 bis 7, **dadurch gekennzeichnet, dass** die strahlende Oberfläche (10) mindestens eines Strahlungsgasbrenners von oben nach unten und von außen nach innen geneigt ist.

9. Kochgerät nach einem der Ansprüche 1 bis 8, **dadurch gekennzeichnet, dass** es einen Zwischengasbrenner (20) umfasst, der die verschiedenen Gasbrenner miteinander verbindet und die Verbrennung zwischen den verschiedenen Gasbrennern vermittelt.

10. Kochgerät nach einem der Ansprüche 1 bis 9, **dadurch gekennzeichnet, dass** der Konvektionsgasbrenner ein röhrenförmiger Flammenbrenner (11) ist.

11. Kochgerät nach einem der Ansprüche 1 bis 10, **dadurch gekennzeichnet, dass** es ein Kochfach (14) umfasst, das in dem Unterbau unter den Strahlungs- und Konvektionsgasbrennern eingebaut ist.
